# EUROPEAN PATENT SPECIFICATION

(11) **EP 0 738 904 B1**
(45) Date of publication and mention of the grant of the patent: **11.07.2001**
(21) Application number: 96106114.0
(22) Date of filing: 18.04.1996
(51) Int. Cl.: G02B 3/00

(54) **Adaptive illumination device, in particular vehicle headlight**
Adaptives Beleuchtungsgerät, insbesondere Fahrzeugscheinwerfer
Dispositif d'illumination adaptatif, en particulier phare de véhicule

(30) Priority: 19.04.1995 IT TO950312
(43) Date of publication of application: 23.10.1996
(73) Proprietor: Automotive Lighting Italia Spa, 10078 Venaria Reale (Torino) (IT)
(72) Inventor: Perlo, Piero, I-12048 Sommariva del Bosco (IT); Sinesi, Sabino, I-10045 Piossasco (IT); Sardi, Luca, I-10057 Sant' Ambrogio Torinese (IT); Alessandretti, Giancarlo, I-10098 Rivoli (IT); Monk, John c/o Magneti Marelli S.p.A., I-10078 Venaria Reale (IT); Masuelli, Stefania, I-10043 Orbassano (IT); Bartoncini, Renzo, I-10045 Piossasco (IT)
(74) Representative: Plebani, Rinaldo

(56) References cited:
- EP-A- 0 563 874
- WO-A-94/18582
- OPTICAL ENGINEERING, vol. 33, no. 11, November 1994, BELLINGHAM US, pages 3616-3623, XP000475105 M.E. MOTAMEDI ET AL.: "miniaturized micro-optical scanners"
- OPTICAL ENGINEERING, vol. 29, no. 11, November 1990, BELLINGHAM US, pages 1392-1397, XP002008083 W. GOLTSOS ET AL.: "agile beam steering using binary optics microlens arrays"

## Description

The present invention relates to an adaptive illumination device which is particularly useful for use as a vehicle headlight.

It is known that in order to provide ideal illumination, the shaping of the light beam emitted by a headlight should be modified dynamically as a function of the conditions of travel of the vehicle, for example taking account of the speed, of the steering angle, of the inclination of the road and/or of the vehicle (this being linked with the latter's conditions of load), as well as of the meteorological conditions (fog, rain) and/or of external factors (illumination). For example, the simplest of such dynamical shapings is the passage from main beam to dipped beam when crossing with other vehicles.

Currently, passage from one condition of illumination to the other is obtained either using multiple illumination devices (for example, main lamp, dipped lamp, fog lamp, etc.), or else using bulky, expensive and inflexible electromechanical devices, for example servo-systems which rotate the whole headlight physically with respect to the bodywork in order to vary the direction of propagation of the beam on a bend or else to vary the conditions of load of the car; or else, servo mechanisms which act on full-aperture optics (i.e. acting on the whole of the beam) arranged in cascade.

In the field of optics, furthermore, it is known to obtain a deflection at a preset angle of a monochromatic light beam through the use of two matrices of microoptics arranged in cascade, and one of which is movable relative to the other matrix by means of piezoelectric actuators (W. Goltsoz and M. Holz, "Optical Engineering" vol. 29, page 1392, 1990). A further known solution is that of the so-called "beam expanders", i.e. a pair of convergent/divergent (or vice versa) matrices of microoptics arranged aligned along the optical axis one in front of the other, at a distance along the optical axis which can be controlled by actuators; the vergence of the beam obtained is varied by varying this distance. Here and in the following description "vergence" is understood to mean the angle of aperture of the beam (which, when it is equal to 0° defines collimated beams, all the rays being parallel, when it is greater than 0° defines divergent beams and, when it is less than 0°, defines convergent beams). On the other hand for "geometric characteristics" is to be intended the totality of the geometrical characteristics which govern the propagation of a beam, i.e. its direction, its inclination with respect to the optical axis of the illumination device, and its vergence.

The above solutions, based on microoptics, however, besides not exhibiting, apparently, the flexibility required to solve the problem, have never been applied to headlights or, in general, to the adaptive shaping of a beam, both monochromatic and polychromatic.

The aim of the invention is to provide an adaptive illumination device, i.e. one capable of rapidly varying not only the vergence, but also all the other distribution parameters of an emitted light beam, in such a way as to be able to adapt, in the case of vehicle headlights, the light emitted to the conditions of travel and/or ambient conditions, using any single light source. The aim of the invention is also to provide a compact and reliable device which is relatively simple to construct.

According to the invention there is therefore constructed an adaptive illumination device, in particular a vehicle headlight, able to selectively emit a plurality of light beams with different preset characteristics, of the type comprising a light source, a first and a second transparent support arranged in front of the source and provided, respectively, with first and second optical elements, a reflector arranged on the opposite side from the supports in order to direct towards the latter respective light rays emitted by the source not directly towards the supports, and actuator means for moving the supports relatively in front of the source; wherein the first optical elements are each defined by an individual microoptic and are arranged on the first support in the form of a first microoptics matrix able to generate, for each element, a corresponding microbeam controlled in its overall geometric characteristics; and where in the second optical elements are arranged on the second support in the form of a second microoptics matrix which is arranged in cascade with the first matrix; each said second optical element consisting either of an individual microoptic having optical characteristics varying over the area covered thereby, or of a group of mutually differing microoptics arranged adjacent to one another, the second elements being sized such that in response to a relative movement such as translation, rotation or rototranslation of the two supports, said microbeams selectively intercept the second elements at different zones having different optical properties so as to contribute to beam shaping in a different way whereby adaptive shaping of the said plurality of light beams emerging from the elements of the second matrix is obtained.

Therefore, the second matrix of microoptics comprises a number of microoptics greater than (or equal to) that of the first optical elements of the first matrix. In particular, the microoptics forming the said first matrix are all mutually identical microoptics or, at most, differ from one another, exhibiting exclusively predefined phase variations with respect to one another. Furthermore, when each said second optical element forming the second matrix of microoptics is defined by a single microoptic this microoptic is an hybrid one, for instance it is a microoptic shaped at its edge and so sized to comprise at least two zones apt to contribute to beam shaping in a different way.

In this way, by means of suitable relative shiftings of the two supports, it is possible to cascade a plurality of mutually differing microoptics (or of regions having different optical characteristics of one and the same complex microoptic) of the second matrix with each microoptic of the first matrix, thereby obtaining the generation of a plurality of overall light beams also with mutually completely differing characteristics.

For example, by prearranging in the second matrix a suitable quantity of micromasks and of elements able to vary the intensity distribution of the beam, it will be possible to convert a main beam into a dipped beam or the latter into a fog beam. Similarly, by prearranging suitable deviating microoptics in the second matrix, it will be possible to vary the vergence of the beam leaving the device, in such a way as to follow a bend or a gradient.

Obviously, the variations in distribution and shape of the beam will be obtainable under the manual control of the user (for example passing from main to dipped and vice versa), or else will be controllable automatically, for example by operating the actuator means through a central control unit connected to at least one of the following sensors: steering angle sensor, vehicle speed sensor, sensor of meteorological conditions, for example wetness of the road, visibility, etc.

Preferably, finally, the microoptics of the said first matrix are of a type each able to generate a microbeam having geometrical characteristics identical to those of at least one of the said beams with preset characteristics to be generated, and also control at least part of the intensity distribution of such a beam, the microoptics of said first matrix being of a type able to vary the intensity of each of the said microbeams individually. In this way, the tasks of shaping and distributing the plurality of beams which can be generated with the device of the invention become subdivided between the two matrices of microoptics, making it possible to perform with the second matrix solely intensity redistribution operations (which may go as far as the suppression of individual rays) or operations directing the microbeams generated by the first matrix.

Further aims and advantages of the present invention will emerge clearly from the following description of a few non-limiting exemplary embodiments thereof, given with reference to the figures of the attached drawings, in which:
- Figure 1 represents a schematic view in elevation of a vehicle headlight made according to the invention and of its control system;
- Figure 2 illustrates schematically a few alternative embodiments of a constructional detail of the device of Figure 1;
- Figures 3 and 4 exemplify two possible types of matrices of microoptics which can be used in the device of Figure 1;
- Figures 5, 6 and 7 illustrate three different types of optical element which can be used in the device of the invention;
- Figure 8a illustrates a portion of a matrix of rectangular microlenses;
- Figure 8b illustrates the far field pattern of the matrix of microlens described in Figure 8b;
- Figure 9a illustrates microoptics shaped with the typical periphery that defines the dipped output beam of a headlamp;
- Figure 9b is the far field on a screen at 25 m given by the array of Figure 9a sized 120 mm in diameter and illuminated by the beam emitted by an automotive incandescent source with an aluminium protecting cover and a parabola with focal =15.88 mm and external diameter 116 mm;
- Figure 10a illustrates two matrices in cascade where the first matrix is composed of microlenses and the second matrix is composed of both microlenses and microprisms with the microlenses in position;
- Figure 10b illustrates the two matrices of Figure 10a with a shift applied to the second matrix in such a way that the prisms are in position;
- Figure 11a illustrates a first matrix of microoptics located on annulus and Figure 11b illustrates the corresponding second matrix of microoptics where per each element of the first matrix there is a group of two microoptics which can be selected at different times;
- Figure 12 illustrates a portion of a matrix of monofocal lenses with different focals; and
- Figure 13 illustrates the variation of the divergence of the envelope beam exiting the two matrices starting from an F number of the overall system equal 2.

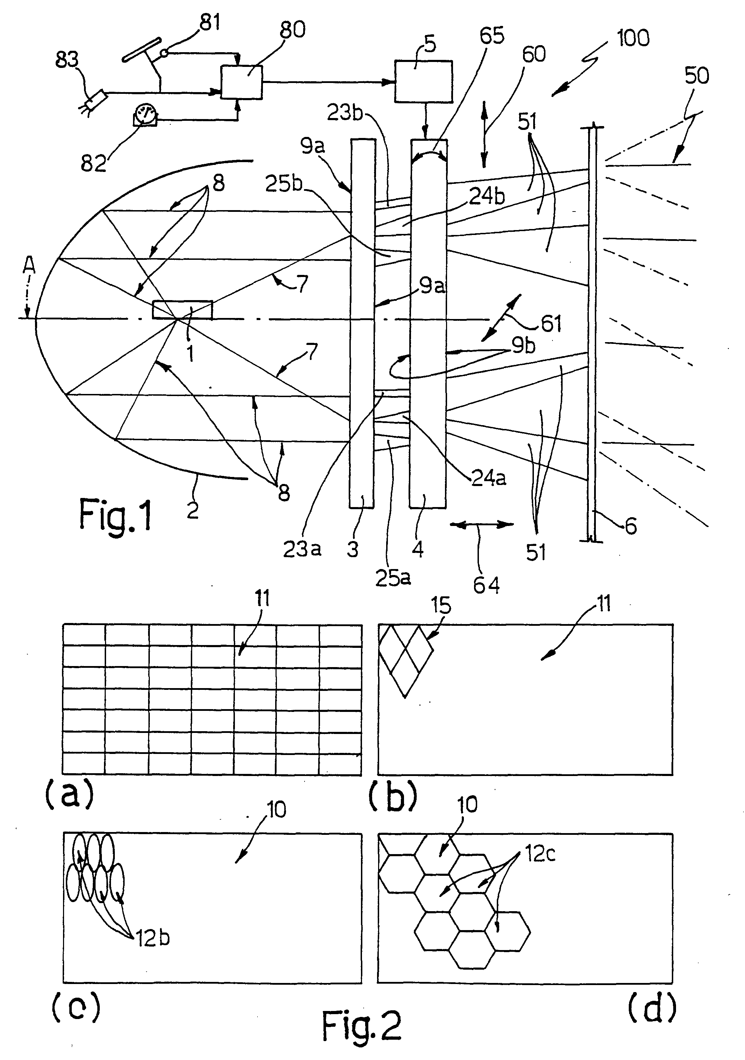

With reference to Figures 1 and 2, indicated overall as 100 is an illumination device, in this instance a vehicle headlight, essentially comprising a casing (which is known but not illustrated for the sake of simplicity) inside which are arranged a light source 1 and a reflector 2, and which is closed externally (for example in a fluid-tight manner) by a transparent screen 6 arranged somehow in front of the reflector 2 and the source 1. According to the invention, furthermore, inside the aforesaid casing are also housed, again in front of the source 1 and the reflector 2, but before the screen 6, two transparent supports 3 and 4, arranged aligned along the optical axis of the reflector 2, indicated as A, and each defined by a plane lamina made from a heat-resistant glass or plastic material; each support 3, 4 is delimited by a respective pair of surfaces or faces, indicated respectively as 9a for the support 3 and as 9b for the support 4, arranged in series in front of the source 1 with respect to the path of the light rays 7, 8 emitted thereby.

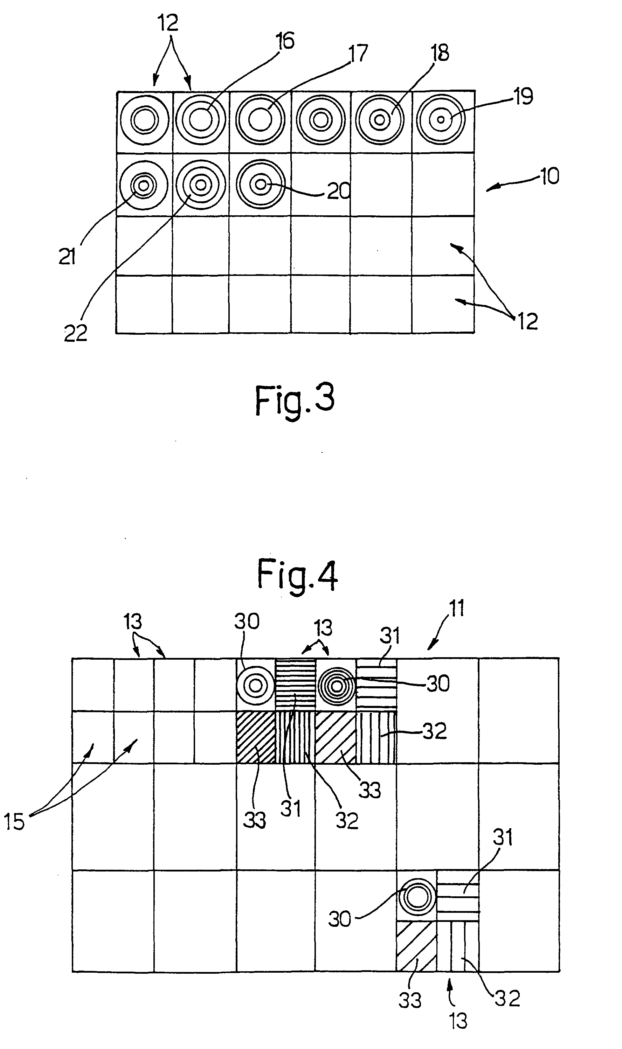

In this instance, the reflector 2 is arranged on the opposite side from the supports 3, 4 with respect to the source 1 and is able to direct towards the faces 9a, 9b respective light rays 8 emitted by the source 1 not directly towards the faces 9a, 9b. On the other hand these receive, directly, the rays 7 emitted by the source 1 towards the supports 3, 4. According to the invention, two matrices 10, 11 (Figures 3 and 4) in cascade (with respect to the path of the rays 7 and 8) of optical elements 12 and, respectively, 13, are arranged on either one of the faces 9a of the support 3 and on either one of the corresponding faces 9b of the support 4.

The light source 1 may be of any type, able to emit monochromatic, polychromatic, coherent, partially coherent or fully incoherent light; for example it may be a filament (incandescent), gas, ion discharge or solid-state polymeric bulb, or consist of a laser; in the case in which there is no desire to utilize the direct rays 7, furthermore, the source 1 can be masked in a known way with an appropriate blanking hood arranged beside the supports 3, 4. The reflector 2 is conversely defined by a reflecting surface generated by revolving one or more base curves and, generally, is a conventional parabolic reflector; it is therefore extremely simple and economical to construct. Similarly, the outer transparent screen 6 is preferably completely smooth and devoid of any optical function and can therefore be made in any shape (plane, curved, etc.) and arranged at any inclination, even very steep, with respect to the optical axis A.

In case of necessity and/or having recourse to a favourable positioning, the screen 6 may however also be endowed with optical functions, for example of traditional prismatics, or carry internally, on the side pointing towards the supports 3, 4, optical elements of the type of the elements 12, 13, however distributed and however made on the support. For example, the matrices 11, 12 are preferably made directly on the faces 9a and 9b by injection molding of plastics such as polycarbonate or PMMA or according to a known technology are made on transparent polymeric film which is in turn applied as a liquid coating to the respective faces 9a and 9b of the substrate then UV polymerised on the substrate with the relieved master in position. Where the thermal load on the first matrix may be of concern the first matrix could be made on glass substrate; conventional stamping, dry and wet etching are usable as well.

According to what is illustrated schematically in Figures 2, 3 and 4, the optical elements 12 and 13 of the matrices 10 and 11 each consist either of an individual microoptic of any perimetral shape, or of a group 15 of a preset number, for example four, of microoptics, which are mutually identical or different from one another, arranged immediately adjacent to one another, of any perimetral shape, but however such as to be conjugate with the perimetral shape of the other adjacent microoptics of the same group. The size of the elements in the two matrices defines the working principle of the optical components. When the size is several millimetres and for instance the microoptics are spherical lenses refraction dominates, when the size is below 3 mm the effect of diffraction begins to be effective and the shape of the single microoptics becomes to be important for the final far field pattern to be obtained. It is a novelty of this invention to use such kind of hybrid effects to shape and chromatically correct polychromatic beam as well as monochromatic light beams. The elements in the two matrices have sizes such that diffraction at the periphery defining each element is a crucial part of the design. Such kind of hybrid optical components can be of several types for instance the single microoptics can be a spherical microlens whose centre works in refraction and the edge introduces diffraction. But it can be a high efficiency purely diffractive lens. In this case it can be supposed that the central part works like a refractive one while its periphery contributes by diffraction to define the shape of the exiting beam. In a more general sense hybrid optic is here intended as optical components, parts of a matrix, sized in such a way that the shape of the elements contributes to define the shape of the exiting pattern. An extreme case but a significant one is the matrix of purely binary two levels diffractive lenses, if it is shaped rectangular with proper size and relief height it defines a rectangular uniform beam in the far field. The optical elements 12 forming the matrix 10 (Figures 2c, 2d and 3) are each defined by an individual microoptic. In this instance, the microoptics 12 forming the matrix 10 can all be mutually identical, for example all microoptics of hexagonal shape 12c (Figure 2d) or else of elliptical shape 12b (Figure 2c), or else can be microoptics having the same perimetral shape but exhibiting predefined phase variations one with respect to another, for example can consist of multifocal and/or monofocal microlenses with different focal lengths 16, 17, 18, 19, 20, 21, 22, etc.(shown schematically in Figure 3). In every case, the microoptics making up the optical elements 12 are each able to generate a corresponding microbeam controlled in all its geometric characteristics (vergence etc.); for example (Figure 1) on passing through the matrix 10 the rays 7, 8 will generate respective collimated microbeams 23a and 23b, the first parallel to the optical axis A and the second inclined with respect to the axis A, respective divergent microbeams 24a, 24b at a different inclination with respect to the axis A and with a different "aperture" angle, and respective convergent microbeams 25a, 25b.

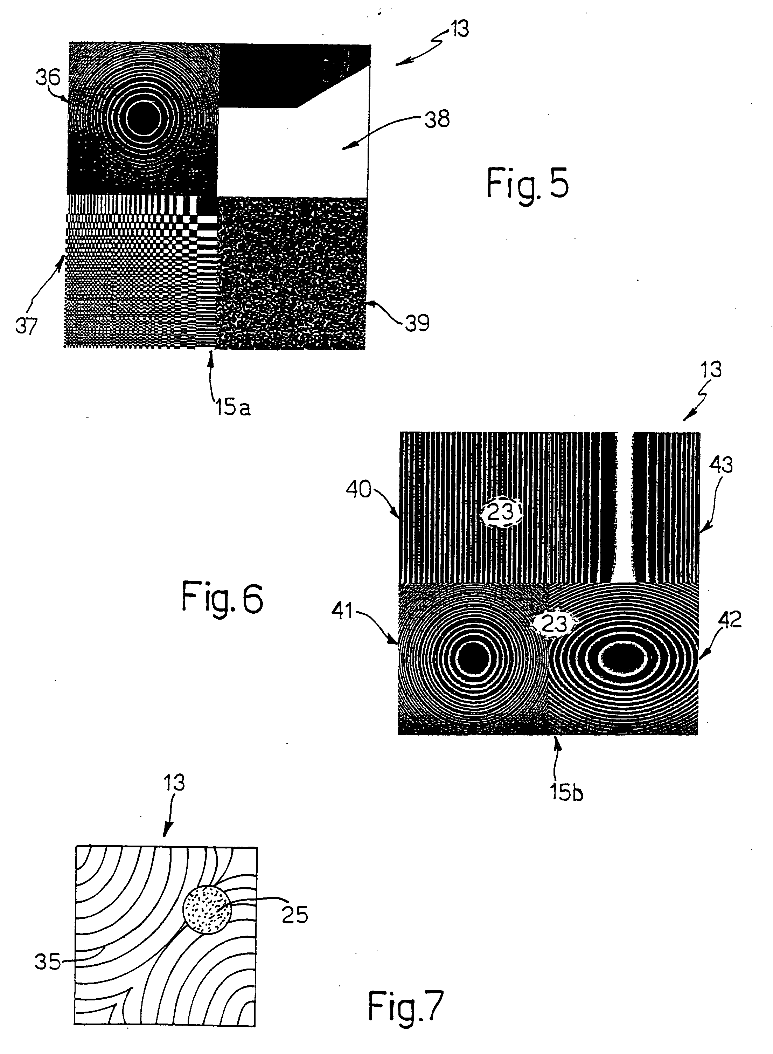

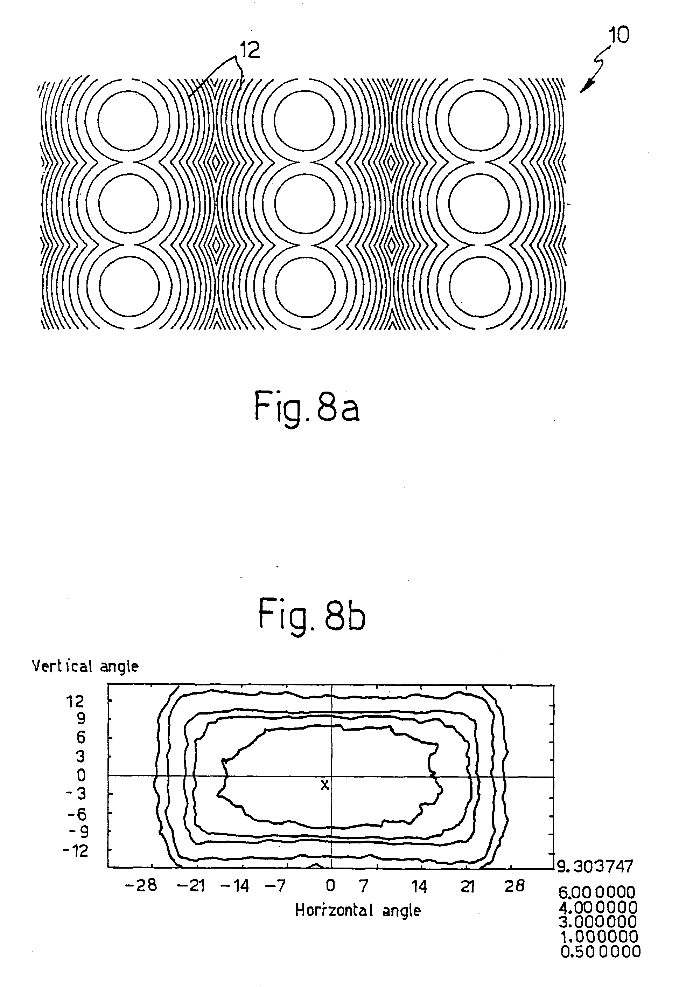

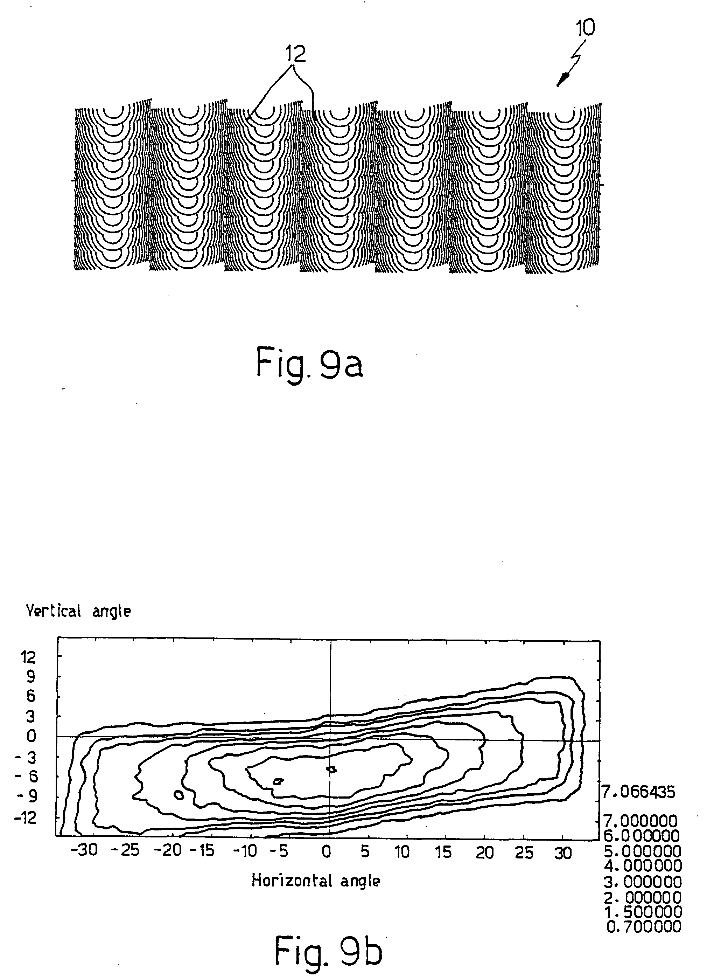

On the other hand (Figures 2a, 2b, 4) in the matrix 11 each element 13 is formed by groups 15 of microoptics of rectangular (Figures 1a, 4), rhombic (Figure 2b) or any other shape, able to intercept selectively, in different relative positions, the microbeams 23, 24, 25, etc. emitted by the matrix 10. Conversely, according to the embodiment of Figure 7, each element 73 consists of a singular complex microoptic 35 having optical characteristics varying over the area covered thereby, so as to be apt to intercept selectively microbeams 23, 24, 25 in different points of such area having different optical properties. In both cases, the optical properties of each optical element 13 of the matrix 11 are therefore dependent on the relative position of the matrix 11 with respect to the matrix 10. According to embodiment of Figures 4, 5, 6 for each element 12 of the first matrix there is a group 15 of microoptics in the second matrix which form a multiple element 13; the periphery enclosing that group of elements is coupled both in shape and in size to the one of the single element of the first matrix: namely, it is the perimeter or shape and size of group 15 that is equal to the single microoptics of the first array 10 (see Figure 8 and Figure 9). Each optical element 13 is so formed by an identical group of four mutually differing adjacent microoptics 30, 31, 32, 33, or else by (Figures 5 and 6) mutually different groups, for example 15a, 15b, etc., of microoptics again all mutually different. If as a special case the element of the first matrix is rectangularly shaped L x L/N the element of the group corresponding in the second matrix can be squared L/N x L/N. If N=3 there will be 3 different microoptics in the group making up the single element of the second array, if N=4 there will be 4 microoptics and more in general with N=1,2,3,4,5, .. any integer number limited by technological aspects only. If the single element in the first array is squared L x L each microoptics in the group can be squared L/N x L/N with N=1,2,3,4,5, ..; with N=4 there will be N x N=16 different microoptics per each element in the first matrix.
Considering the first matrix A_{K,M} as a whole with K x M elements we can indicate the single element with aᵢⱼ with i=1,2,3,4 .. and J=1,2,3,4 ... If the microoptics are all equal for instance rectangular sized L x H and the element in the corresponding group of the second matrix are all rectangular sized L/N x H/S per each microoptics of the first matrix there are N x S different microoptics in the second array.

For example the matrix 11 can contain one or more groups 15a each comprising four microoptics consisting of a multifocal lens 36, a multi-order grating 37, a mask 38 and a hologram 39; or groups 15b comprising for instance four microoptics (which can be two, three, five, six, etc.) consisting of a prism 40, a multi-order lens 41, an aspherical lens 42 and a cylindrical lens 43. The group 15a or 15b is repeated all over the matrix 11 equal to itself or for a better control of both beam shape and distribution and of the cromatism could be repeated with slightly different elements in their phase function.

It is clear that, by virtue of the structure described, by moving the supports 3, 4 relatively, the relative position of the cascaded microoptics 12 and 13 is varied thereby causing the microbeams 23, 24, 25, etc. generated by the matrix 10 to be intercepted selectively at different points of the complex optical elements 13 (Figures 6 and 7) having different optical characteristics, thereby generating, selectively (Figure 1), a plurality of overall light beams 50 passing through the screen 6, each one of which results from the summation, coherent, incoherent or partially coherent, of respective microbeams 51 emerging from the elements 13 of the matrix 11.

To obtain correct operation, the optical elements 13 forming the matrix 11 have to be present in a number greater or equal to that of the corresponding optical elements 12 of the matrix 10, and, in every case, each must have an area greater than that projected onto the matrix 11 by each of the corresponding microbeams 23, 24, 25, etc. generated by the matrix 10, which projections are represented schematically in Figures 6 and 7 with dashed and heavy solid lines respectively. In such a way, matrix 11 comprises always a number of microoptics greater than (or at least equal to) that of elements 12 of matrix 10.

According to a further characteristic of the invention, finally, the microoptics 12 making up part of the first matrix 10 are chosen of a type such that the microbeams 23, 24, 25, etc. generated by them each already have, as inherent geometrical characteristics, all those same geometrical characteristics which it is desired to obtain for at least one of the overall beams 50 generated by the device 10. In combination with such a characteristic, the microoptics defining the optical elements 13 of the second matrix will be chosen of a type also able to modulate in a preset manner, individually or contemporaneously, the microbeams intercepted by them in one or more of the following quantities: intensity, distribution and polarization. Consequently, the overall beams 50 produced by the device 10 will be generated, according to the invention, by the superposition of all the microbeams generated by the microoptics 12 and, possibly, modified in their characteristics other than those which are purely geometrical, by the microoptics 13.

Microoptics meeting this specification may be of the most disparate types; for example, each microoptic defining (or making up) a complex element 12 or 13 can be defined by a known individual optical element describable by a complex transmission function of analytical type suitably discretized, or else of digital type (for example the elements 37 and 39 of Figure 5), in which the function describes the presence of binary codes defined by relieves (high/low), continous profiles or by barriers (pass/no-pass); therefore, the microoptics defining the complex elements 12, 13 may be of pure phase, i.e. able to transmit all the incident light, or else of amplitude, i.e. which absorb or reflect a portion of the beam incident thereon; for example, the micromasks 38 to be used in the matrix 11 can be structured micromasks of the grey levels or amplitude binary type.

For better control of the uniformity of the overall light beam, in the case of polychromatic sources 1, phasewise differing microoptics are used for the complex elements 12, as already described, for example ones which differ from one another only through the phase constant, which varies in relation to the position of the microoptic in the matrix. More generally, the microoptics defining the elements 12 can be refractive microoptics, diffractive microoptics or hybrid refractive-diffractive microoptics, whereas the microoptics defining the complex elements 13 will be exclusively of diffractive or hybrid refractive-diffractive type; as already described, furthermore, the microoptics of the matrix 10 can be shaped (Figure 2c, 2d, 8 and 9) to control not only the geometrical characteristics of the microbeams 23, 24, 25, etc., but also, at least within certain limits, to vary the intensity of each microbeam individually, in such a way as to control, already with the matrix 10, at least part of the intensity distribution of the overall beams 50, since a definite shape of outline, combined with a definite type of microoptic already provides a preset divergence; hence the appropriate combination of the geometry of the microlenses with their optical characteristics enables a modification of the shape and intensity of the individual microbeams to be obtained simultaneously. An example of rectangular microoptics is illustrated in Figures 8a and 8b. A further example is illustrated in Figure 9a where the microoptics are shaped with a periphery that defines the typical dipped beam of a headlamp. The periphery is inscribed in a rectangle size 2.5 mm x 1.2 mm. The corresponding far field pattern is illustrated in Figure 9b.

Specific types of microoptic which are preferred in order to embody the invention comprise two-level or multilevel or continuous relief, pure phase binary diffractive elements, of the computer-generated hologram type, prismatic elements of diffractive or microrefractive type and, specifically for the microoptics of the matrix 10, diffractive, refractive or hybrid general aspherical elements.

According to a preferred and important variant of the invention, one of the microoptics making up each group 15 of the matrix 11 is made as an element of the computer-generated hologram type (such as 39 of Figure 5) shaped in such a way as to vary the state of polarization of the microbeams intercepted by it; this variant is particularly useful for devices 10 intended to be used as headlights: in this way, in fact, by moving either the support 4 or 3 in such a way as to intercept with these elements all the microbeams generated by the matrix 10 it is possible to attenuate or prevent dazzling when crossing while preserving beams having high luminous intensity. According to requirements, some of the microoptics of the matrix 11 can also consist of plane transparent elements of the window type, so as not to vary the characteristics of the microbeams intercepted by such elements.

Preferred optical elements for embodying the microoptics of the matrices 10 and 11 are also subwavelength diffractive structures, otherwise known as zero-order diffractive structures, or else elements able to generate a high number of light spots, of the type: fanout gratings, multi-order gratings, Dammann gratings, and their generalizations having symmetrical or asymmetrical structures. In fact, these particular elements make it possible to attenuate or solve, as will be seen, the problem of the generation of chromatic aberrations in the overall beam, which are connected with the shifts in the wavelength distribution of the light rays produced by microoptics. Solutions of chromatic correction are here considered as those per which at all angles of the far field both diffracted and rifracted rays overlap with relative intensities such as the beam has specified chromatic coordinate, i.e. white light.

A first solution to the abovementioned problem, consists in using for the matrix 10 microoptics exhibiting dispersive chromatic characteristics opposite to those of the corresponding microoptics of the matrix 11; so, for example, in conjunction with microoptics of diffractive type for the matrix 11, it will be necessary to use microoptics of exclusively refractive type for the matrix 10. A second solution to the problem is to be mindful that at least one of the two matrices 10, 11 consists exclusively of pure-phase microoptics of the kinoform type, of higher order than the first one, which consist of hybrid refractive-diffractive microlenses which are sufficiently thick to obtain refraction and are provided with relieves of different height arranged as a grating, to obtain diffraction. Kinoforms of order higher than four have been proved to be sufficiently adeguate for chromatic control of lighting devices.

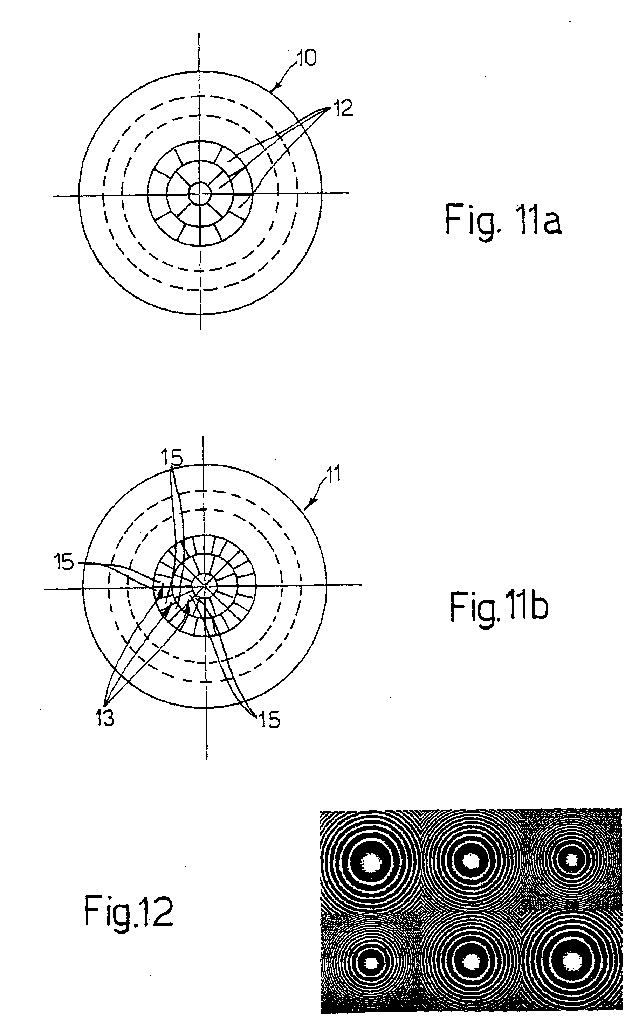

A further solution to the problem is to use for either the matrix 10 or 11 microoptics of monofocal type, all differing from one another and distributed in the matrix in such a way as to correct the chromatic aberrations present in the overall beam 50. In this instance such as to obtain a combination of white light through the effect of the coherent addition of the individual microbeams. Figure 12 is such an example of a matrix with monofocal lenses with different focals introduced to reduce the residual chromatic aberration; increased beam uniformity has been proved as well.

Another possible solution is to use matrices of microoptics composed of diffractive multifocal elements, like the elements 16, 22 schematically illustrated in Figure 3 and the real element 36 illustrated in Figure 5; this way, the microbeams generated, focused in multispots along the optical axis per each wavelength are recombined in the overall beam 50.

A further solution, adaptable in the case described earlier of the use for the matrices 10, 11 of elements able to generate a high number of light spots, such as fanout, Dammann, etc. gratings (Figure 5, element 37), is finally to use microoptics devised to produce a partial superposition between the light spots generated by the microoptics of the matrix 10 with those produced by the microoptics of the matrix 11; in fact, such partial superposition, if properly devised, produces a recombination of the chromatic aberrations present in the individual microbeams around preset wavelengths, in this instance white light. A description of the method of producing a very high number of spots is given for instance in the paper "Analytical initial approximation for multi-order binary grating design"; L. Doskolovitch et al in Pure ed Applied Optics.3 (1994) pages 921-930.

In use, the support 3 is fixed with respect to the source 1, whereas the support 4 is connected to an actuationer 5, which may be an actuator of any known type, for example an electromechanical, piezoelectric, polymorphic, magnetorestrictive, electrostatic transducer, etc., able to move the support 4 relative to 3 in accordance with one, two or more of the modes indicated by arrows in Figure 1, for example to shift the support 4 vertically and/or horizontally (i.e. perpendicularly to the plane of the sheet) (arrows 60 and 61, with 61 being illustrated in perspective), to move the support 4 away from/towards 3 parallel to the optical axis A (arrow 64), or again to rotate the support 4 in such a way as to vary its inclination with respect to the optical axis A (arrow 65). In a preferred embodiment the microoptics are located in annulus such as those illustrated in Figure 11. Figure 11a represents the first matrix 10 and Figure 11b illustrates the second matrix 11 in cascade. Per each element 12 of the first matrix 10 there are group of two microoptics 15 forming a corresponding element 13 in the second matrix 11. The selection of one of the two being possible by a simple rotation of one of the matrix. Disposition of the microoptics on spirals are possible and easily implementable.

These movements are controlled by operating the actuator 5 (or a series of actuators 5 each specialized to effect an individual movement described) by means of a central control unit 80, which is able to receive commands from a user, via respective push-buttons/switches which are not illustrated, or else signals from, for example, a sensor 81 of the steering angle, a sensor 82 of vehicle speed, a sensor 83 of meteorological conditions (wetness, mist, etc.) so as to process them with a program stored in this facility, so as to generate respective commands for the actuator 5.

In every case, the relative movements between the supports 3 and 4 (it is obviously possible also to move both the supports 3, 4 or else to keep 4 still and move only 3) determine relative shifts between elements 12 and elements 13 which cause (Figures 6 and 7) one and the same microbeam produced by the matrix 10 to fall on different zones (at least two) of a corresponding complex (or hybrid) microoptic 35 of the matrix 11 (microoptics shaped at its edge and sized such as said different zones are able to contribute in a different manner at the beam shaping), or on different microoptics of the same group 15 of the matrix 11, or again, in the case in which the groups 15 are fewer in number than the elements 12, straddling two different microoptics 42, 43 of one and the same group 15 of the matrix 11. In this fashion, each microbeam generated by the matrix 10 can be "processed" and corrected by the matrix 11 in intensity, wavelength distribution and polarization in a plurality of different ways (in this instance, at least four different ones in the case of the matrix 11 formed by groups 15 of four elements and present in identical number to that of the elements 12), consequently generating overall beams 50 with different distributional characteristics, for example provided with cut-offs, see Figure 5 element 38 (therefore suitable to constitute anti-fog beams or dipped beams), having a different vergence (therefore able to illuminate one and the same sector differently).

It is also clear that the control described may be accomplished not only in discrete mode, but also in continuous mode, in which case, by using microoptics such as 35, whose optical characteristics vary continuously over its area, it will for example be possible to vary the inclination (lateral and/or vertical) of the beam 50 continuously as a function of the steering angle, so as, for example, to follow a bend by rotating the beam 50 as a function of the position of the vehicle on the bend.

### Performance of a typical preferred embodiment

With reference to Figure 1 and Figures 9a, 9b using an aluminium protected coated parabola with focal F=15.88 mm cut with an external exiting diameter of 116 mm, a H1 source typically used in the automotive, a matrix of uncoated glass of microoptics shaped such as those in Figure 9a inscribed in a rectangle of 2.5 mm x 1.2 mm, and similarly with polycarbonate, the far field pattern (on standard screen at 25 m) is reported in Figure 9b. The measured efficiency of the system, ratio of the flux emitted by the source and the flux exiting the system, has been measured to be 72%. The use of sources with metallic covers simplify the control of the beam, in fact the amount of direct light is totally eliminated.

For this sizes of the microoptics in the array the adaptability of the system is obtained by actuators of relatively modest accuracy, because resolution in the micron range is not needed, while stabilization to vibrations, and mechanical and thermal loads resistance is needed. Though several forms of low cost actuation are possible the most effective proved to be the conventional e/m step motor. Continuous e/m and piezo motors have been successfully experimented as well.

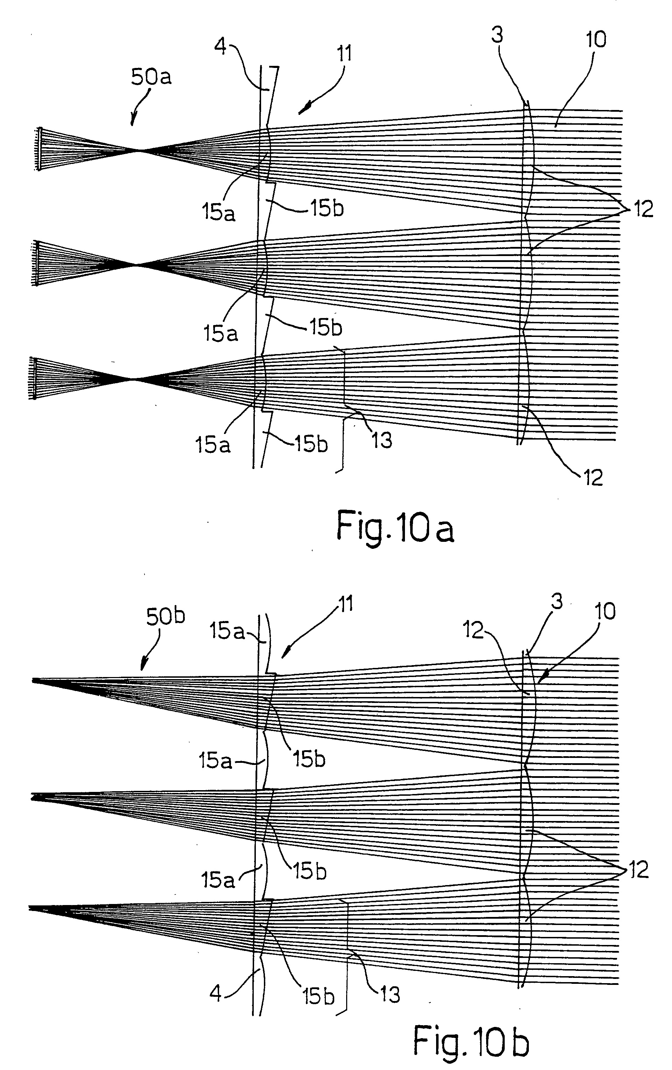

In a typical solution the adaptive performance of the system has been implemented by a telescopic arrangement illustrated in Figure 10a where two positive microoptics are combined. If for instance the microoptics of the first matrix 10 is composed of squared spherical microlenses with focal F, height H and F number K, when the second matrix 11, composed of spherical microlenses with focal F/2 and the same F number K, are located at a distance F/2 from the first matrix the F number of the overall system is halved to K/2. The technological implications associated to the fabrication of devices with small F numbers needed to obtain the correct divergence of the headlamp beam are then equally divided in the construction of both two matrices 10, 11.

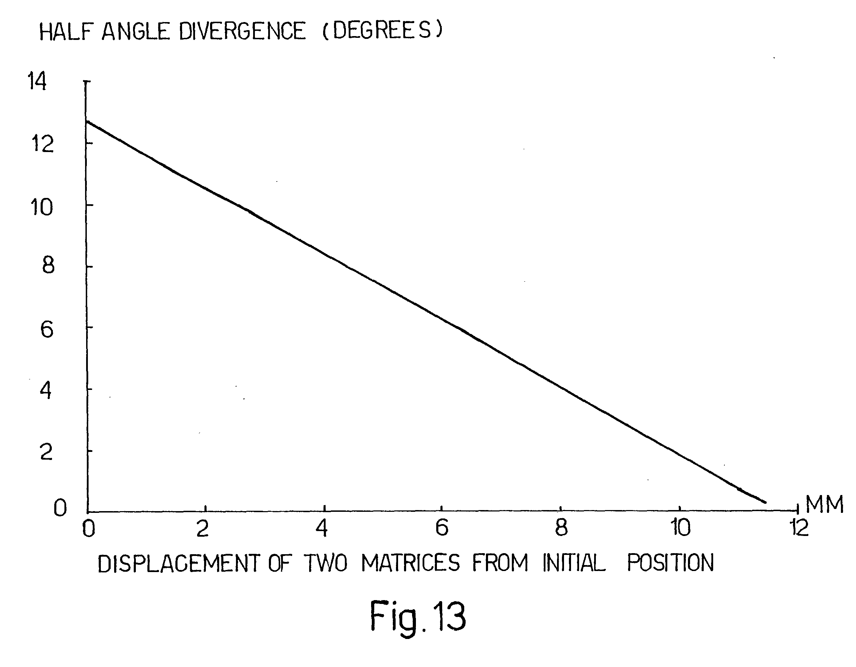

The control of the divergence can be obtained by varying the spacing between the two matrices 10 and 11. Figure 13 illustrates the variation of the divergence of the envelope beam exiting the two matrices starting from an F number of the overall system equal 2. An actuation of few millimetre proved to be sufficient for the typical divergence adaptive control of headlamp.

Figure 10b prooves in comparison with Figure 10a the effect of switching from one microoptic 15a of the second matrix to another microoptic 15b of the same group forming each element 13, in this case from a microlenses 15a to a prism 15b illustrated in analogical form; the beam, respectively 50a and 50b, changes its direction. This situation is particularly exiting useful in many cases of driving.

## Claims

1. Adaptive illumination device, in particular a vehicle headlight, able to selectively emit a plurality of light beams with different preset characteristics, of the type comprising a light source, a first and a second transparent support (3,4) arranged in front of the source (1) and provided, respectively, with first and second optical elements, a reflector (2) arranged on the opposite side from the supports (3,4) in order to direct towards the latter respective light rays emitted by the source (1) not directly towards the supports, and actuator means (5) for moving the supports relatively in front of the source; wherein the first optical elements (12) are each defined by an individual microoptic and are arranged on the first support (3) in the form of a first microoptics matrix (10) able to generate, for each element, a corresponding microbeam controlled in its overall geometric characteristics; and wherein the second optical elements (13) are arranged on the second support in the form of a second microoptics matrix (11) which is arranged in cascade with the first matrix; each said second optical element consisting either of an individual microoptic having optical characteristics varying over the area covered thereby, or of a group of mutually differing microoptics (30-33) arranged adjacent to one another, the second optical elements being sized such that, in response to a relative movement such as translation, rotation or rototranslation of the two supports, said microbeams selectively intercept the second elements at different zones having different optical properties so as to contribute to beam shaping in a different way whereby adaptive shaping of the said plurality of light beams emerging from the elements of the second matrix is obtained.

2. Adaptive illumination device according to Claim 1, wherein each said second optical element of the second matrix is defined by an individual hybrid microoptic or by a microoptic so shaped at its edge and so sized to have at least two zones apt to contribute in a different manner at the beam shaping.

3. Adaptive illumination device according to one of the preceding claims, wherein the microoptics forming the said first matrix are all mutually identical microoptics.

4. Adaptive illumination device according to any one of Claim 1 or 2, wherein at least some of the microoptics forming the said first matrix differ from one another, exhibiting exclusively predefined phase variations with respect to one another.

5. Adaptive illumination device according to Claim 4, wherein the said phase variations are constant, periodic or quasi-periodic.

6. Adaptive illumination device according to one of the preceding claims, wherein the microoptics of the said first matrix are each of a type able to generate a microbeam having geometrical characteristics identical to those of at least one of the said beams with preset characteristics to be generated.

7. Adaptive illumination device according to Claim 6, wherein the first microoptics also control at least part of the intensity distribution of at least one of the said beams with preset characteristics, being of a type able to vary the intensity of each of the said microbeams individually.

8. Adaptive illumination device according to any one of the preceding claims, wherein the microoptics of at least one of the said first and second matrices have a perimetral outline of a shape and dimension such as to determine, independently of the optical characteristics of the microoptic, a modification of the shape and/or of the intensity of the said microbeams.

9. Adaptive illumination device according to any one of the preceding claims, wherein the said second matrix of microoptics comprises a number of microoptics greater than or equal to that of the said first optical elements of the first matrix of microoptics and each have areas greater than that projected onto the second matrix by each of the corresponding microbeams generated by the first matrix of microoptics.

10. Adaptive illumination device according to Claim 9, wherein the second optical elements forming the second matrix of microoptics are all identical to one another.

11. Adaptive illumination device according to Claim 9, wherein at least some of the second optical elements forming the second matrix of microoptics differ from one another.

12. Adaptive illumination device according to any one of the preceding claims, wherein the microoptics with which the said first and second matrices are formed are chosen from the group consisting in: refractive microoptics, diffractive microoptics, hybrid refractive-diffractive microoptics, respectively of pure phase or of amplitude and of analytical or digital type.

13. Adaptive illumination device according to any one of the preceding claims, wherein the said light source is chosen from the group consisting in: filament, gas, ion discharge or solid-state polymeric bulbs; the said reflector being defined by a reflecting surface generated by revolving one or more base curves; and the said device furthermore comprising an outer transparent screen arranged in front of the said supports so as to be traversed by the said plurality of overall beams.

14. Adaptive illumination device according to Claim 13, wherein the said outer transparent screen is completely smooth and devoid of any optical function.

15. Adaptive illumination device according to any one of the preceding claims, wherein the microoptics forming the said second matrix comprise prismatic elements of diffractive or microrefractive type.

16. Adaptive illumination device according to any one of the preceding claims, wherein the microoptics forming the said second matrix comprise diffractive, refractive or hybrid general aspherical elements.

17. Adaptive illumination device according to any one of the preceding claims, wherein the microoptics forming the said second matrix comprise two-level or multilevel or continuous relief pure phase binary diffractive elements, of the computer-generated hologram type.

18. Adaptive illumination device according to Claim 17, wherein the said microoptics of the said second matrix comprise elements of the computer-generated hologram type shaped in such a way as to vary the state of polarization of the microbeams intercepted by the second matrix.

19. Adaptive illumination device according to any one of the preceding claims, wherein the microoptics forming the said second matrix comprise plane transparent elements of the window type, so as not to vary the characteristics of the microbeams intercepted thereby.

20. Adaptive illumination device according to any one of the preceding claims, wherein the microoptics forming the said second matrix comprise structured micromasks of the grey levels or amplitude binary type.

21. Adaptive illumination device according to any one of the preceding claims, wherein the microoptics forming the said second matrix comprise subwavelength diffractive structures (zero-order diffractive structures).

22. Adaptive illumination device according to any one of the preceding claims, wherein at least the microoptics forming the said second matrix are of a type able to generate a high number of light spots, for example of the type: fanout gratings, multi-order gratings, Dammann gratings, and their generalizations having symmetrical or asymmetrical structures.

23. Adaptive illumination device according to any one of the preceding claims, wherein the microoptics of the first matrix exhibit dispersive chromatic characteristics opposite to those of the corresponding microoptics of the second matrix.

24. Adaptive illumination device according to any one of Claims 1 to 21, wherein the microoptics of the first matrix are exclusively of refractive type.

25. Adaptive illumination device according to any one of Claims 1 to 21, wherein at least one of the said first and second matrices of microoptics consists exclusively of pure-phase microoptics of the kinoform type of higher order than the first one.

26. Adaptive illumination device according to any one of Claims 1 to 21, wherein the microoptics of the second matrix are monofocal microoptics which differ from one another and are distributed in the second matrix in such a way as to correct the chromatic aberrations present in the microbeams around preset wavelengths.

27. Adaptive illumination device according to any one of Claims 1 to 21, wherein at least one of the said first and second matrices of microoptics is composed of multifocal microoptics.

28. Adaptive illumination device according to Claim 22, wherein the microoptics of the second matrix are able to produce a partial superposition between the light spots generated by the first and/or the second optical elements such as to determine a far field correction of the chromatic aberrations present in the said microbeams.

29. Adaptive illumination device according to any one of the preceding claims, wherein the said actuator means are able to shift one or both of the said supports with respect to the said source.

30. Adaptive illumination device according to any one of the preceding claims, wherein the said actuator means comprise at least one transducer chosen from the group consisting in: electromechanical, piezoelectric, polymorphic, magnetorestrictive, electrostatic transducers.

31. Adaptive illumination device according to any one of the preceding claims, wherein the said actuator means are controlled by a central control unit connected to at least one of the following sensors: steering angle sensor, vehicle speed sensor, meteorological conditions sensor.

## Patentansprüche

1. Adaptive Beleuchtungsvorrichtung, insbesondere Fahrzeugscheinwerfer, der wahlweise mehrere Lichtstrahlen mit unterschiedlichen im voraus eingestellten Charakteristiken emittieren kann, des Typs, der eine Lichtquelle, eine erste und eine zweite durchlässige Halterung (3, 4), die vor der Quelle (1) angeordnet und mit ersten bzw. zweiten optischen Elementen versehen sind, einen Reflektor (2), der auf der gegenüberliegenden Seite der Halterungen (3, 4) angeordnet ist, um die Lichtstrahlen, die von der Quelle (1) nicht direkt zu den Halterungen emittiert werden, zu den Halterungen zu lenken, und Aktuatormittel (5) zum relativen Bewegen der Halterungen vor der Quelle umfaßt; wobei die ersten optischen Elemente (12) jeweils durch eine einzelne mikrooptische Einrichtung definiert sind und auf der ersten Halterung (3) in Form einer ersten Matrix (10) aus mikrooptischen Einrichtungen angeordnet sind, die für jedes Element einen entsprechenden Mikrostrahl erzeugen kann, der in seinen gesamten geometrischen Charakteristiken gesteuert wird; und wobei die zweiten optischen Elemente (13) auf der zweiten Halterung in Form einer zweiten Matrix (11) aus mikrooptischen Einrichtungen angeordnet sind, die kaskadenförmig zur ersten Matrix angeordnet ist; wobei jedes zweite optische Element entweder eine einzelne mikrooptische Einrichtung mit optischen Charakteristiken enthält, die sich über dem vom ihr versorgten Bereich ändern, oder eine Gruppe von untereinander verschiedenen mikrooptischen Einrichtungen (30-33), die zueinander benachbart angeordnet sind, enthält, wobei die zweiten optischen Elemente derart bemessen sind, daß als Antwort auf eine Relativbewegung, wie etwa eine Verschiebung, eine Drehung oder eine Drehverschiebung, der beiden Halterungen die Mikrostrahlen die zweiten Elemente wahlweise in unterschiedlichen Zonen erreichen, die unterschiedliche optische Eigenschaften besitzen, wodurch eine adaptive Formung der mehreren Lichtstrahlen, die von den Elementen der zweiten Matrix ausgehen, erreicht wird.

2. Adaptive Beleuchtungsvorrichtung nach Anspruch 1, bei der jedes der zweiten optischen Elemente der zweiten Matrix durch eine einzelne mikrooptische Hybrideinrichtung oder durch eine mikrooptische Einrichtung definiert ist, die an ihrem Rand so geformt und bemessen ist, daß sie wenigstens zwei Zonen aufweist, die so beschaffen sind, daß sie in unterschiedlicher Weise zur Strahlformung beitragen.

3. Adaptive Beleuchtungsvorrichtung nach einem der vorhergehenden Ansprüche, bei der alle mikrooptischen Einrichtungen, die die erste Matrix bilden, untereinander gleiche mikrooptische Einrichtungen sind.

4. Adaptive Beleuchtungsvorrichtung nach Anspruch 1 oder 2, bei der wenigstens einige der mikrooptischen Einrichtungen, die die erste Matrix bilden, untereinander dadurch verschieden sind, daß sie lediglich verschiedene im voraus definierte Phasenänderungen aufweisen.

5. Adaptive Beleuchtungsvorrichtung nach Anspruch 4, bei der die Phasenänderungen konstant, periodisch oder quasiperiodisch sind.

6. Adaptive Beleuchtungsvorrichtung nach einem der vorhergehenden Ansprüche, bei der die mikrooptischen Einrichtungen der ersten Matrix jeweils von einem Typ sind, der einen Mikrostrahl mit geometrischen Charakteristiken erzeugen kann, die gleich jenen von wenigstens einem der zu erzeugenden Strahlen mit im voraus eingestellten Charakteristiken sind.

7. Adaptive Beleuchtungsvorrichtung nach Anspruch 6, bei der die ersten mikrooptischen Einrichtungen außerdem wenigstens teilweise die Intensitätsverteilung von wenigstens einem der Strahlen mit im voraus eingestellten Charakteristiken steuern, indem sie von einem Typ sind, der die Intensität von jedem der Mikrostrahlen einzeln ändern kann.

8. Adaptive Beleuchtungsvorrichtung nach einem der vorhergehenden Ansprüche, bei der die mikrooptischen Einrichtungen von wenigstens einer Matrix von den ersten und zweiten Matrizen einen äußeren Umfang mit der Form und Abmessung besitzen, um unabhängig von den optischen Charakteristiken der mikrooptischen Einrichtung eine Modifikation der Form und/oder der Intensität der Mikrostrahlen zu bestimmen.

9. Adaptive Beleuchtungsvorrichtung nach einem der vorhergehenden Ansprüche, bei der die zweite Matrix aus mikrooptischen Einrichtungen eine Anzahl von mikrooptischen Einrichtungen enthält, die größer oder gleich der Anzahl der optischen Elemente der ersten Matrix aus mikrooptischen Einrichtungen ist und jeweils Bereiche aufweist, die größer sind als diejenigen, die durch jeden der durch die erste Matrix aus mikrooptischen Einrichtungen erzeugten entsprechenden Mikrostrahlen auf die zweite Matrix projiziert werden.

10. Adaptive Beleuchtungsvorrichtung nach Anspruch 9, bei der alle zweiten optischen Elemente, die die zweite Matrix aus mikrooptischen Einrichtungen bilden, untereinander gleich sind.

11. Adaptive Beleuchtungsvorrichtung nach Anspruch 9, bei der wenigstens einige der zweiten optischen Elemente, die die zweite Matrix aus mikrooptischen Einrichtungen bilden, voneinander verschieden sind.

12. Adaptive Beleuchtungsvorrichtung nach einem der vorhergehenden Ansprüche, bei der die mikrooptischen Einrichtungen, aus denen die ersten und zweiten Matrizen gebildet sind, aus der Gruppe gewählt sind, die enthält: strahlbrechende mikrooptische Einrichtungen, strahlbeugende mikrooptische Einrichtungen, strahlbrechend-strahlbeugende mikrooptische Hybrideinrichtungen, die jeweils vom reinen Phasentyp oder vom Amplitudentyp und vom analytischen Typ oder vom digitalen Typ sind.

13. Adaptive Beleuchtungsvorrichtung nach einem der vorhergehenden Ansprüche, bei der die Lichtquelle aus der Gruppe gewählt ist, die enthält: Glühlampen, Gaslampen, lonenentladungslampen oder Feststoff-Polymerlampen; wobei der Reflektor durch eine reflektierende Oberfläche definiert ist, die durch Drehen einer oder mehrerer Basiskurven erzeugt wird; und wobei die Vorrichtung ferner einen äußeren durchlässigen Schirm enthält, der vor den Halterungen angeordnet ist, so daß er von den mehreren Gesamtstrahlen durchstrahlt wird.

14. Adaptive Beleuchtungsvorrichtung nach Anspruch 13, bei der der äußere durchlässige Schirm vollständig glatt und ohne jede optische Funktion ist.

15. Adaptive Beleuchtungsvorrichtung nach einem der vorhergehenden Ansprüche, bei der die mikrooptischen Einrichtungen, die die zweite Matrix bilden, prismatische Elemente des strahlbeugenden oder des mikrostrahlbrechenden Typs enthalten.

16. Adaptive Beleuchtungsvorrichtung nach einem der vorhergehenden Ansprüche, bei der die mikrooptischen Einrichtungen, die die zweite Matrix bilden, strahlbeugende, strahlbrechende oder allgemeine asphärische Hybridelemente enthalten.

17. Adaptive Beleuchtungsvorrichtung nach einem der vorhergehenden Ansprüche, bei der die mikrooptischen Einrichtungen, die die zweite Matrix bilden, strahlbeugende Binärelemente des reinen Phasentyps mit Zweiebenen-, Mehrebenen- oder kontinuierlichem Relief des Typs mit durch einen Computer erzeugtem Hologramm enthalten.

18. Adaptive Beleuchtungsvorrichtung nach Anspruch 17, bei der die mikrooptischen Einrichtungen der zweiten Matrix Elemente des Typs mit durch einen Computer erzeugtem Hologramm enthalten, die geformt sind, um den Polarisationszustand der Mikrostrahlen, die durch die zweite Matrix aufgenommen werden, zu ändern.

19. Adaptive Beleuchtungsvorrichtung nach einem der vorhergehenden Ansprüche, bei der die mikrooptischen Einrichtungen, die die zweite Matrix bilden, ebene durchlässige Elemente des Fenstertyps enthalten, um die Charakteristiken der Mikrostrahlen, die durch sie aufgenommen werden, nicht zu ändern.

20. Adaptive Beleuchtungsvorrichtung nach einem der vorhergehenden Ansprüche, bei der die mikrooptischen Einrichtungen, die die zweite Matrix bilden, strukturierte Mikromasken des Graustufentyps oder des binären Amplitudentyps enthalten.

21. Adaptive Beleuchtungsvorrichtung nach einem der vorhergehenden Ansprüche, bei der die mikrooptischen Einrichtungen, die die zweite Matrix bilden, strahlbeugende Subwellenlängen-Strukturen (strahlbeugende Strukturen der Ordnung null) enthalten.

22. Adaptive Beleuchtungsvorrichtung nach einem der vorhergehenden Ansprüche, bei der wenigstens die mikrooptischen Einrichtungen, die die zweite Matrix bilden, von einem Typ sind, der eine große Anzahl von Lichtpunkten erzeugen kann, beispielsweise des folgenden Typs: auffächernde Beugungsgitter, Mehrordnungs-Beugungsgitter, Dammann-Beugungsgitter und ihre Verallgemeinerungen mit symmetrischen oder asymmetrischen Strukturen.

23. Adaptive Beleuchtungsvorrichtung nach einem der vorhergehenden Ansprüche, bei der die mikrooptischen Einrichtungen der ersten Matrix im Gegensatz zu den Charakteristiken der entsprechenden mikrooptischen Einrichtungen der zweiten Matrix zerstreuende chromatische Charakteristiken aufweisen.

24. Adaptive Beleuchtungsvorrichtung nach einem der Ansprüche 1 bis 21, bei der die mikrooptischen Einrichtungen der ersten Matrix ausschließlich vom strahlbrechenden Typ sind.

25. Adaptive Beleuchtungsvorrichtung nach einem der Ansprüche 1 bis 21, bei der wenigstens eine der ersten und zweiten Matrizen aus mikrooptischen Einrichtungen ausschließlich mikrooptische Einrichtungen des reinen Phasentyps und des Kinoform-Typs mit einer höheren Ordnung als der ersten Ordnung enthält.

26. Adaptive Beleuchtungsvorrichtung nach einem der Ansprüche 1 bis 21, bei der die mikrooptischen Einrichtungen der zweiten Matrix mikrooptische Monofokus-Einrichtungen sind, die sich voneinander unterscheiden und in der zweiten Matrix so verteilt sind, daß sie die chromatischen Aberrationen, die in den Mikrostrahlen enthalten sind, in der Nähe von im voraus eingestellten Welienlängen korrigieren.

27. Adaptive Beleuchtungsvorrichtung nach einem der Ansprüche 1 bis 21, bei der wenigstens eine der ersten und zweiten Matrizen aus mikrooptischen Einrichtungen mikrooptische Mehrfokus-Einrichtungen enthält.

28. Adaptive Beleuchtungsvorrichtung nach Anspruch 22, bei der die mikrooptischen Einrichtungen der zweiten Matrix eine teilweise Überlagerung zwischen den Lichtpunkten, die durch die ersten und/oder zweiten optischen Elemente erzeugt werden, herstellen kann, so daß eine Fernfeldkorrektur der chromatischen Aberrationen, die in den Mikrostrahlen vorhanden sind, bestimmt werden kann.

29. Adaptive Beleuchtungsvorrichtung nach einem der vorhergehenden Ansprüche, bei der die Aktuatormittel eine oder beide Halterungen in bezug auf die Quelle verschieben können.

30. Adaptive Beleuchtungsvorrichtung nach einem der vorhergehenden Ansprüche, bei der die Aktuatormittel wenigstens einen Wandler enthalten, der aus der Gruppe gewählt ist, die enthält: elektromechanische, piezoelektrische, polymorphe, magnetorestriktive und elektrostatische Wandler.

31. Adaptive Beleuchtungsvorrichtung nach einem der vorhergehenden Ansprüche, bei der die Aktuatormittel durch eine zentrale Steuereinheit gesteuert werden, die mit wenigstens einem der folgenden Sensoren verbunden ist: Lenkwinkelsensor , Fahrgeschwindigkeitssensor , Sensor für meteorologische Bedingungen.

## Revendications

1. Dispositif d'éclairement adaptatif, notamment phare de véhicule, apte à émettre sélectivement une pluralité de faisceaux de lumière qui ont différentes caractéristiques préréglées, du type comprenant une source de lumière, des premier et second supports transparents (3,4) disposés en face de la source (1) et comportant respectivement des premier et second éléments optiques, un réflecteur (2) disposé sur le côté situé à l'opposé des supports (3,4) pour diriger vers ces derniers, des rayons lumineux respectifs, qui ne sont pas émis par la source (1) directement en direction des supports, et des moyens formant actionneur (5) pour déplacer les supports de façon relative en avant de la source ; dans lequel les premiers éléments optiques (12) sont définis chacun par un système micro-optique individuel et sont disposés sur le premier support (3) sous la forme d'une première matrice (10) de systèmes micro-optiques apte à produire, pour chaque élément, un microfaisceau correspondant dont les caractéristiques géométriques générales sont commandées ; et dans lequel les seconds éléments optiques (13) sont disposés sur le second support sous la forme d'une seconde matrice (11) de systèmes micro-optiques, qui est disposée en cascade avec la première matrice ; chacun desdits seconds éléments optiques étant constitué par un système micro-optique individuel possédant des caractéristiques optiques qui varient sur la surface couverte par ce système, ou par un groupe de systèmes micro-optiques (30-33), qui diffèrent les uns des autres et sont disposés au voisinage les uns des autres, les seconds éléments optiques étant dimensionnés de telle sorte qu'en réponse à un déplacement relatif tel qu'une translation, une rotation ou une rotation-translation des deux supports, lesdits microfaisceaux interceptent sélectivement les seconds éléments dans des zones différentes qui possèdent des propriétés optiques différentes de manière à contribuer à mettre en forme le faisceau d'une manière différente, ce qui a pour effet qu'on obtient une mise en forme adaptative de ladite pluralité de faisceaux de lumière sortant des éléments de la seconde matrice.

2. Dispositif d'éclairage adaptatif selon la revendication 1, dans lequel chacun desdits seconds éléments optiques de la seconde matrice est défini par un système micro-optique hybride individuel ou par système micro-optique conformé au niveau de son bord et dimensionné de telle sorte qu'au moins deux zones sont aptes à contribuer de différentes manières à la mise en forme du faisceau.

3. Dispositif d'éclairement adaptatif selon l'une des revendications précédentes, dans lequel les systèmes micro-optiques formant ladite première matrice sont tous des systèmes micro-optiques identiques entre eux.

4. Dispositif d'éclairement adaptatif selon l'une quelconque des revendications 1 ou 2, dans lequel au moins certains des systèmes micro-optiques formant ladite première matrice diffèrent les uns des autres, en présentant exclusivement des variations de phase prédéfinies entre elles.

5. Dispositif d'éclairage adaptatif selon la revendication 4, dans lequel lesdites variations de phase sont constantes, périodiques ou quasi-périodiques.

6. Dispositif d'éclairage adaptatif selon l'une des revendications précédentes, dans lequel les systèmes micro-optiques de ladite première matrice sont chacun d'un type permettant de produire un microfaisceau possédant des caractéristiques géométriques identiques à celles d'au moins l'un desdits faisceaux possédant des caractéristiques préréglées, qui doivent être produites.

7. Dispositif d'éclairage adaptatif selon la revendication 6, dans lequel les premiers systèmes micro-optiques commandent également au moins une partie de la distribution d'intensité d'au moins l'un desdits faisceaux avec des caractéristiques préréglées, en étant d'un type apte à modifier individuellement l'intensité de chacun desdits microfaisceaux.

8. Dispositif d'éclairage adaptatif selon l'une quelconque des revendications précédentes, dans lequel les systèmes micro-optiques d'au moins l'une desdites première et seconde matrices possèdent un contour périphérique ayant une forme et des dimensions qui déterminent, indépendamment de la caractéristique optique du système électro-optique, une modification de la forme et/ou de l'intensité desdits microfaisceaux.

9. Dispositif d'éclairage adaptatif selon l'une quelconque des revendications précédentes, dans lequel ladite seconde matrice de systèmes micro-optiques comprend un certain nombre de systèmes micro-optiques supérieur ou égal à celui desdits premiers éléments optiques de la première matrice de systèmes micro-optiques et les différents systèmes possèdent des zones plus étendues que celles projetées sur la seconde matrice par chacun des microfaisceaux correspondants produits par la première matrice de systèmes micro-optiques.

10. Dispositif d'éclairage adaptatif selon la revendication 9, dans lequel les seconds éléments optiques formant la seconde matrice de systèmes micro-optiques sont tous identiques entre eux.

11. Dispositif d'éclairage adaptatif selon la revendication 9, dans lequel au moins certains des seconds éléments optiques formant la seconde matrice de systèmes micro-optiques diffèrent les uns des autres.

12. Dispositif d'éclairage adaptatif selon l'une quelconque des revendications précédentes, dans lequel les systèmes micro-optiques, à l'aide desquels lesdites première et seconde matrices sont formées, sont choisis dans le groupe comprenant : des systèmes micro-optiques produisant une réfraction, des systèmes micro-optiques produisant une diffraction, des systèmes micro-optiques hybrides produisant une réfraction et une diffraction, respectivement du type à phase pure, ou du type à amplitude ou de type analytique ou numérique.

13. Dispositif d'éclairage adaptatif selon l'une quelconque des revendications précédentes, dans lequel ladite source de lumière est choisie dans le groupe comprenant : un filament, un gaz, une décharge d'ions ou des ampoules polymères à l'état solide ; ledit réflecteur étant défini par une surface réfléchissante produite par la rotation d'une ou plusieurs courbes de base ; et ledit dispositif comprenant en outre un écran extérieur transparent disposé en avant dudit support de manière à être traversé par ladite pluralité de faisceaux d'ensemble.

14. Dispositif d'éclairage adaptatif selon la revendication 13, dans lequel ledit écran extérieur transparent est entièrement lisse et ne présente aucune fonction optique.

15. Dispositif d'éclairage adaptatif selon l'une quelconque des revendications précédentes, dans lequel les systèmes. micro-optiques formant ladite seconde matrice comprennent des éléments prismatiques du type à diffraction ou à microréfraction.

16. Dispositif d'éclairage adaptatif selon l'une quelconque des revendications précédentes, dans lequel les systèmes micro-optiques formant ladite seconde matrice comprennent des éléments asphériques généraux réalisant une diffraction; avec réfraction ou hybrides.

17. Dispositif d'éclairage adaptatif selon l'une quelconque des revendications précédentes, dans lequel les systèmes micro-optiques formant ladite seconde matrice comprennent des éléments de diffraction binaires à phase pure à relief à deux niveaux ou à niveaux multiples ou continu, du type hologramme produit par ordinateur.

18. Dispositif d'éclairage adaptatif selon la revendication 17, dans lequel. lesdits systèmes micro-optiques de ladite seconde matrice comportent des éléments du type à hologramme produit par ordinateur, conformés de manière à modifier l'état de polarisation des microfaisceaux interceptés par la seconde matrice.

19. Dispositif d'éclairage adaptatif selon l'une quelconque des revendications précédentes, dans lequel les systèmes micro-optiques formant ladite seconde matrice comprennent des éléments plats transparents du type à fenêtre de manière à ne pas modifier les caractéristiques des microfaisceaux interceptés par ces systèmes micro-optiques.

20. Dispositif d'éclairage adaptatif selon l'une quelconque des revendications précédentes, dans lequel les systèmes micro-optiques formant ladite seconde matrice comprennent des micromasques structurés ayant des niveaux de gris ou du type binaire à amplitude.

21. Dispositif d'éclairage adaptatif selon l'une quelconque des revendications précédentes, dans lequel les systèmes micro-optiques formant ladite seconde matrice comprennent des structures de diffraction de sous-longueurs d'onde (structures de diffraction d'ordre zéro).

22. Dispositif d'éclairage adaptatif selon l'une quelconque des revendications précédentes, dans lequel au moins les systèmes micro-optiques formant ladite seconde matrice sont d'un type apte à produire un nombre élevé de spots lumineux, par exemple du type : réseaux de sortance, réseaux à ordres multiples, réseaux de Dammann et leurs généralisations ayant des structures symétriques ou dissymétriques.

23. Dispositif d'éclairage adaptatif selon l'une quelconque des revendications précédentes, dans lequel les systèmes micro-optiques de la première matrice présentent des caractéristiques chromatiques dispersives opposées à celles des systèmes électro-optiques correspondants de la seconde matrice.

24. Dispositif d'éclairage adaptatif selon l'une quelconque des revendications 1 à 21, dans lequel les systèmes micro-optiques de la première matrice sont exclusivement du type à réaction.

25. Dispositif d'éclairage adaptatif selon l'une quelconque des revendications 1 à 21, dans lequel au moins l'une desdites première et seconde matrices de systèmes micro-optiques est constituée exclusivement de systèmes optiques microscopiques à phase pure du type kinoform d'un ordre supérieur à celui du premier type.

26. Dispositif d'éclairage adaptatif selon l'une quelconque des revendications 1 à 21, dans lequel les systèmes micro-optiques de la seconde matrice sont des systèmes micro-optiques monofocaux qui diffèrent l'un de l'autre et sont distribués dans la seconde matrice de manière à corriger des aberrations chromatiques présentes dans les microfaisceaux autour de longueurs d'onde préréglées.

27. Dispositif d'éclairage adaptatif selon l'une quelconque des revendications 1 à 21, dans lequel dans lequel au moins l'une desdites première et seconde matrices de systèmes micro-optiques est formée de systèmes micro-optiques multifocaux.

28. Dispositif d'éclairage adaptatif selon la revendication 22, dans lequel les systèmes micro-optiques de la seconde matrice peuvent produire une superposition partielle entre les spots lumineux produits par les premier et/ou second éléments optiques de manière à déterminer une correction de champ lointain des aberrations chromatiques présentes dans lesdits microfaisceaux.

29. Dispositif d'éclairage adaptatif selon l'une quelconque des revendications précédentes, dans lequel lesdits moyens formant actionneurs peuvent déplacer l'un desdits supports ou les deux supports par rapport à ladite source.

30. Dispositif d'éclairage adaptatif selon l'une quelconque des revendications précédentes, dans lequel lesdits moyens formant actionneur comprennent au moins un transducteur choisi dans le groupe comprenant : des transducteurs électromécaniques, piézoélectriques, polymorphes, magnétorésistifs, électrostatiques.

31. Dispositif d'éclairage adaptatif selon l'une quelconque des revendications précédentes, dans lequel lesdits moyens formant actionneurs sont commandés par une unité centrale de commande connectée à au moins l'un des capteurs suivants : capteur de l'angle de braquage, capteur de la vitesse du véhicule, capteur des conditions météorologiques.
